(19) **Europäisches Patentamt**
**European Patent Office**
**Office européen des brevets**

(11) **EP 4 427 950 B1**

(12) **EUROPEAN PATENT SPECIFICATION**

(45) Date of publication and mention
of the grant of the patent:
**11.02.2026  Bulletin 2026/07**

(21) Application number: **23161025.4**

(22) Date of filing: **09.03.2023**

(51) International Patent Classification (IPC):
***B60C 23/04*** *(2006.01)*

(52) Cooperative Patent Classification (CPC):
**B60C 23/0479; B60C 23/0472**

(54) **TIRE IDENTIFICATION GATE AND METHOD FOR LONG MULTI-WHEELED MOTOR VEHICLES SUCH AS TRUCKS, SEMITRUCKS, ROAD TRAINS, BUSES OR THE LIKE**

REIFENIDENTIFIKATIONSSCHRANKE UND VERFAHREN FÜR LANGE MEHRRÄDRIGE KRAFTFAHRZEUGE WIE LASTKRAFTWAGEN, SATTELSCHLEPPER, STRASSENZÜGE, BUSSE O.Ä.

PORTE D'IDENTIFICATION DE PNEU ET PROCÉDÉ POUR VÉHICULES À MOTEUR À LONGUE CHAÎNE, TELS QUE DES CAMIONS, DES SEMI-REMORQUES, DES TRAINS ROUTIERS, DES AUTOBUS OU SIMILAIRES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**11.09.2024  Bulletin 2024/37**

(73) Proprietor: **Bridgestone Europe NV/SA**
**1930 Zaventem (BE)**

(72) Inventors:
  • **Caccami, Maria Cristina**
    **00128 Roma (IT)**
  • **Boldrini, Alessandro**
    **00128 Roma (IT)**
  • **Alleva, Lorenzo**
    **00128 Roma (IT)**
  • **Marrocco, Gaetano**
    **00133 Roma (IT)**

  • **Occhiuzzi, Cecilia**
    **00133 Roma (IT)**
  • **Amendola, Sara**
    **00133 Roma (IT)**
  • **D'Uva, Nicola**
    **00133 Roma (IT)**
  • **Piccardo, Giorgio**
    **00133 Roma (IT)**
  • **Mostaccio, Alessio**
    **00133 Roma (IT)**

(74) Representative: **Marchetti, Alessio**
**Bridgestone Europe NV/SA - Italian Branch Technical Center**
**Via del Fosso del Salceto, 13/15**
**00128 Roma (IT)**

(56) References cited:
**EP-A1- 4 101 662       DE-A1- 102010 026 872**
**JP-A- 2012 126 341**

EP 4 427 950 B1

**Description**

## TECHNICAL FIELD

The present invention relates, in general, to identification of tires of motor vehicles, in particular of long multi-wheeled motor vehicles such as trucks, semitrucks, road trains, buses or the like. More specifically, the present invention concerns a tire identification system and a related tire identification method whose use is particularly advantageous with long multi-wheeled motor vehicles fitted with dual-type wheels.

## STATE OF THE ART

As is known, radiofrequency identification (RFID) technology is widely used in the automotive sector for identification and monitoring aims. In particular, nowadays the integration of RFID devices into/on tires for tire identification and monitoring purposes is widespread in order to:

- optimize production processes, logistics and Original Equipment Manufacturer (OEM) mounting lines operations;
- ensure tire tracking and traceability;
- improve operational efficiency in fleet management (e.g. maintenance operations);
- speed up stock control and audit with more data accuracy; and
- enable services for mobility solutions.

For example, EP 3 074 917 A1 discloses a system for the dynamic reading of data from a vehicle tire transponder having a linearly polarized antenna, said system comprising at least one antenna that can receive data transmitted by the transponder and at least one reader coupled to the antenna and capable of reading and storing the data from the transponder, in which the antenna is a linearly polarized antenna with a vertical electric field.

EP 2 829 659 A1 discloses a stand and antenna assembly for receiving a data transmission from an electronic transmitting device mounted to a vehicle. The vehicle has at least one tire assembly including a tire. The stand and antenna assembly comprises a stand having an upper surface or a substantially convex upper surface, the upper surface comprising a lead-on ramped surface and an exit-off ramped surface aligned and operative to intercept and engage the tire as the tire traverses over the upper surface of the stand. The stand further comprises a base having at least one pocket disposed therein and configured for receiving an antenna assembly, and at least a first antenna assembly within the one pocket of the base. The antenna assembly is seated at a tilt angle with respect to a bottom plane of the base within the pocket and is operative to direct a read field toward a vehicle approach path to the stand.

US 10,935,466 B2 discloses an integrated tire sensor and reader system including at least one sensor unit mounted a tire or a wheel. A reader is disposed remotely from the sensor unit. The sensor unit includes at least one sensor for measuring a parameter of the tire or wheel and an antenna for communicating with the reader. The sensor unit is configured to receive a radio frequency power signal from the reader and to transmit data to the reader. The reader includes an antenna for transmitting the radio frequency power signal to the sensor unit to actuate the one sensor unit. Upon actuation of the sensor unit, the sensor measures the parameter of the tire or wheel, and data from the sensor is transmitted from the sensor unit to the reader.

US 8,009,027 B2 discloses a tire monitoring system and associated method. The tire monitoring system includes a plurality of tire sensor modules, employing contactless sensors, configured to transmit tire data at a predetermined time interval. The system also includes a central control unit that is configured to receive the tire data from the tire sensor modules, and is further configured with an external control unit that can communicate with the tire sensor modules, the central control units and outside sources.

Further tire monitoring systems are known from DE102010026872 A1, EP4101662 A1 and JP2012126341 A.

In this context, it is worth noting that tire identification can become a very hard task in case of trucks, semitrucks, road trains, buses and, more in general, long multi-wheeled motor vehicles due to the close presence of many wheels, often of the dual type. In fact, in these cases, identification data from some tires can be lost, or can be affected by so much noise that they are unusable, or can be wrongly associated with, or confused/combined with data from, other tires, or the like. Therefore, in these scenarios, tire identification performance is noticeably degraded thereby influencing also performance of any other monitoring task performed in combination with, and based on, tire identification (e.g., tire pressure monitoring, tread wear monitoring, etc.).

Thence, nowadays there is a strong need for an efficient tire identification technology in the automotive sector, especially in all those cases where known tire identification technologies are unreliable and inefficient, for example in the case of trucks, semitrucks, road trains, buses and, more in general, long multi-wheeled motor vehicles fitted with dual-type wheels.

## OBJECT AND SUMMARY OF THE INVENTION

In view of the foregoing, the Applicant has felt the need to develop an efficient tire identification technology allowing to efficiently identify tires of motor vehicles, such as long multi-wheeled motor vehicles fitted with dual-type wheels (e.g. trucks, semitrucks, road trains, buses or the like), thereby conceiving the present invention.

Thence, an object of the present invention is that of providing a tire identification technology that, in general, overcomes the technical drawbacks of prior art solutions and, more specifically, provides efficient tire identification of motor vehicles, such as long multi-wheeled motor vehicles fitted with dual-type wheels, trucks, semitrucks, road trains, buses or the like.

This and other objects are achieved by the present invention in that it relates to a computer-implemented method for efficiently identifying tire configuration of motor vehicles, and a related tire identification gate and method, as defined in the attached claims.

In particular, the present invention concerns a computer-implemented method for efficiently identifying tire configuration of motor vehicles having tires fitted, each, with a respective wireless identification device, the method comprising:

- receiving identification data indicative of the unique identifiers of the tires positioned on a left side of a given motor vehicle of said motor vehicles;
- receiving identification data indicative of the unique identifiers of the tires positioned on the right side of the given motor vehicle;
- grouping the received identification data in a left-side data group and a right-side data group;
- sorting the identification data in the left-side group and the identification data in the right-side group according to time order of acquisition;
- for either the left-side group or the right-side group:

  - iteratively applying a K-means clustering method to the sorted identification data thereby obtaining, at each iteration, a respective identification data clustering representing a respective candidate tire configuration of the given motor vehicle;
  - evaluating the obtained identification data clusterings by a Davies-Bouldin Index metric thereby determining an estimated tire configuration of the given motor vehicle;
  - determining an actual tire configuration of the given motor vehicle by evaluating the estimated tire configuration by an Edit Distance metric;

- determining a respective position, in the determined actual tire configuration, of each tire on the side associated to the determined group and assigning to said position the respective unique identifier based on said determined actual tire configuration and on the sorted identification data;
- determining a respective position, in the determined actual tire configuration, of each tire on the opposite side of the given motor vehicle and assigning to said position the respective unique identifier based on said determined actual tire configuration and on the sorted identification data.

## BRIEF DESCRIPTION OF THE DRAWINGS

For the understanding of the present invention, embodiments thereof will be described hereinafter, purely as non-limitative, non-binding examples, with reference to the enclosed drawings, wherein:

- Figure 1 schematically illustrates a high-level functional architecture of an RFID gate for motor vehicles such as trucks or the like according to an embodiment of the present invention;
- Figure 2 shows an exemplary implementation of the RFID gate of Figure 1;
- Figure 3 shows a schematic bottom view of the semitruck of Figure 2;
- Figure 4 schematically illustrates a tire identification method according to an embodiment of the present invention; and
- Figures 5-9 show examples of results obtainable by performing some steps of the tire identification method as exemplified in Figure 4.

## DESCRIPTION OF EMBODIMENTS OF THE INVENTION

Hereinafter the present invention will be described in detail also with reference to the drawings, to allow a person skilled in the art to comprehend, reproduce and use it. Various modifications to the described embodiments will be immediately apparent to the person skilled in the art and the generic principles described can be applied to other embodiments and applications without departing from the protective scope of the present invention, as defined in the attached claims. Therefore, the present invention should not be considered limited to the described and illustrated embodiments, but it must be accorded the widest protective scope in accordance with the described and claimed characteristics.

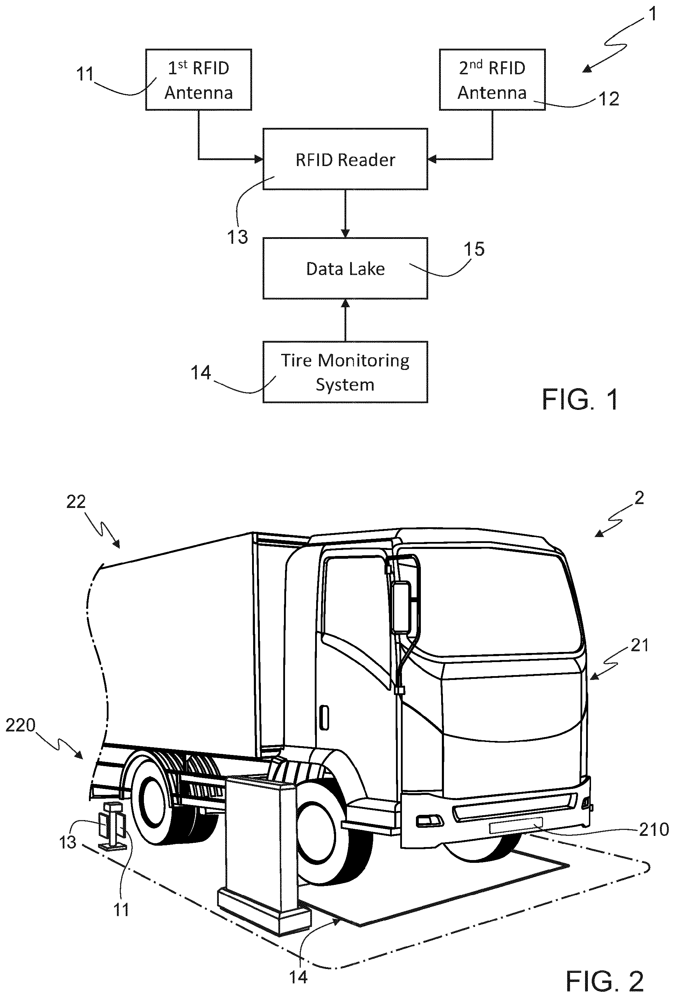

Figure 1 schematically illustrates a high-level functional architecture of an RFID gate (denoted as a whole by 1) for motor vehicles such as trucks or the like (e.g. semitrucks, road trains, buses or, more in general, long multi-wheeled motor vehicles) according to an embodiment of the present invention, while Figure 2 shows an examplary implementation of the RFID gate 1.

In particular, said RFID gate 1 is designed to be driven through by motor vehicles, such as trucks (e.g. the semitruck shown in Figure 2 and denoted as a whole by 2 therein) and comprises a pair of RFID antennas 11, 12 arranged on opposite sides of a path to be driven by the trucks. In this respect, it is worth noting that, in Figure 2, only the right-side RFID antenna 11 (right-side by referring to the driving direction of the semitruck 2) is shown, whereas the left-side RFID antenna 12 is not visible.

Additionally, the RFID gate 1 further includes an RFID reader 13 and a tire monitoring system 14 that is configured, while the semitruck 2 is driving through the RFID gate 1, to monitor one or more tire features, and that, in the example in Figure 2, is implemented by means of a ramp designed to determine tire tread wear (e.g., via laser measurements) of truck's tires rolling thereon.

The semitruck 2 includes a tractor unit 21 and a semi-trailer 22 attached to, and pulled by, the tractor unit 21. The tractor unit 21 is conveniently fitted with a respective RFID tag storing respective identification data indicative of a respective Unique Identifier (UID) of said tractor unit 21: in an exemplary embodiment, said RFID tag might be conveniently mounted/installed on or near a front plate 210 of the tractor unit 21 to be easily readable by the RFID antennas 11, 12. Also the semi-trailer 22 is conveniently fitted with a respective RFID tag storing respective identification data indicative of a respective UID of said semi-trailer 22: in an exemplary embodiment, said RFID tag might be conveniently mounted/installed on a lower part 220 of the semi-trailer 22 to be easily readable by the RFID antennas 11, 12. Moreover, each tire of the semitruck 2 (i.e., of the tractor unit 21 and of the semi-trailer 22) is fitted with a respective RFID tag storing respective identification data indicative of a respective UID of said tire.

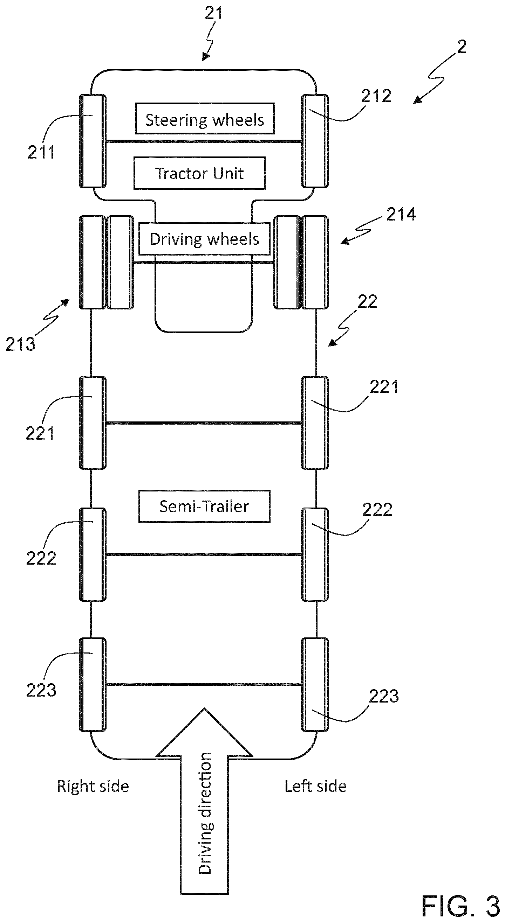

In this respect, Figure 3 shows a schematic bottom view of the semitruck 2 and it is worth noting that:

- the tractor unit 21 is fitted with a front pair of steering wheels 211, 212 and with two rear pairs of dual driving wheels 213, 214; and
- the semi-trailer 22 is fitted with three pairs of trailer wheels 221, 222, 223.

The RFID antennas 11, 12 are configured, while the semitruck 2 is driving through the RFID gate 1, to interrogate the RFID tags of:

- the tractor unit 21,
- the tires of the steering wheels 211, 212 and of the driving wheels 213, 214,
- the semi-trailer 22 and
- the tires of the trailer wheels 221, 222, 223,

to read therefrom the respective identification data carried by the UIDs.

The RFID antennas 11, 12 are further configured to provide the RFID reader 13 with the read identification data.

The RFID reader 13 is a processing device comprising at least one processor and a memory. It can be installed close to the RFID antennas 11, 12, and can be connected thereto in a wired fashion. Otherwise, the RFID reader 13 can be a remote device/system remotely connected to the RFID antennas 11, 12 in a wired and/or wireless manner. In an exemplary embodiment, the RFID reader may be implemented in a cloud computing system at a site that is remote from the RFID gate 1.

The RFID reader 13 is configured to identify and locate the mounting position of each tire of the semitruck 2 with respect to the latter (i.e. determine a respective tire position referenced to said semitruck 2) based on the read identification data received from the RFID antennas 11, 12.

Then, the respective UID and position of each identified, located tire may be stored in a data lake 15 in association with the respective tire monitoring data provided by the monitoring system 14.

In order to identify and locate each tire of the semitruck 2, the RFID reader 13 is programmed to carry out a predefined tire identification method including two main phases, namely a clustering phase and a sequencing phase.

In fact, generally speaking with respect to motor vehicles classifiable as trucks, the actual position of each tire of a truck, and thus its type, is strictly dependent on the truck configuration (more specifically, the tire/wheel configuration/layout of the truck considered). Therefore, it is necessary to distinguish tire clusters, if any, to determine the tire configuration of the truck. Namely, clusters represent tire groups according to the type of truck considered (e.g. tires of steering, driving or trailer wheels). In most cases, each cluster contains more than one tire; hence, a strategy to determine cluster hierarchy is required (sequencing phase).

The predefined tire identification method carried out by the RFID reader 13 focuses on each of the obtained clusters of tires rather than on all the tires of the motor vehicle considered as a whole. In this way, read errors are not propagated over the entire system, but can be treated efficiently within the single cluster in a faster and more accurate way.

More in detail, the predefined tire identification method includes, as previously explained, two main phases: a clustering phase wherein the groups of axles are identified and then a sequencing phase wherein the positions of the tires within the determined tire configuration are identified. In addition, the method can conveniently include some additional specific steps to further improve accuracy (such as twin tire recognition).

It is worth noting that the predefined tire identification method is agnostic of the manner in which the identification data is acquired by the reader: it allows to determine the tire configuration of a motor vehicle (such as a truck) by using only readings of the tire-embedded RFID tags of the tires of the vehicle; that is, the method is applicable also in the absence of any specific RFID tags applied/installed on the vehicle itself (e.g. those identifying the tractor unit 21 and semi-trailer unit 22 of the semitruck 2), and even independently from the specific RFID gate architecture used as long as a suitable reader acquires the read identification data.

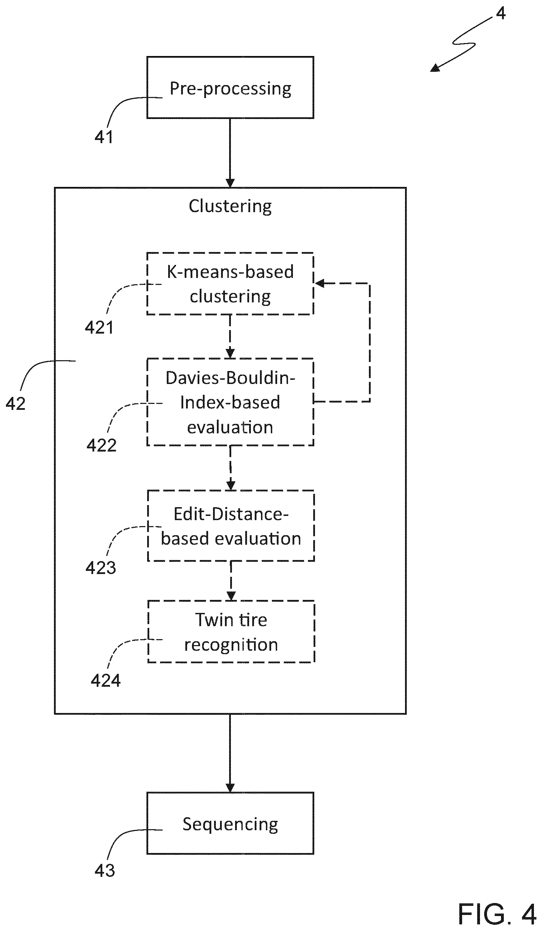

For a better comprehension of the present invention, Figure 4 schematically illustrates a tire identification method (denoted as a whole by 4) that is carried out, in use, by the RFID reader 13 according to an embodiment of the present invention.

As shown in Figure 4, the tire identification method 4 includes a pre-processing step 41 followed by said clustering and sequencing phases (denoted by 42 and 43, respectively).

Hereinafter the tire identification method 4 will be described in detail with reference to a semitruck like that of Fig. 2. However, it will be apparent to the person skilled in the art, in the light of the present disclosure, that the method is likewise applicable to any type of motor vehicle fitted with wheels.

## 1. Pre-processing

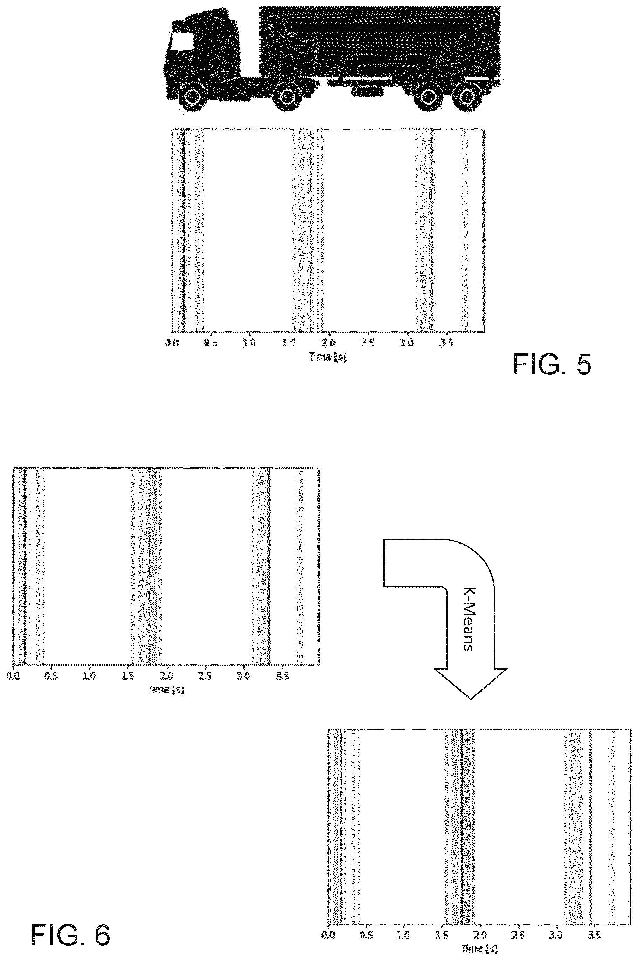

The clustering phase 42 is based on the idea of clustering the read identification data (i.e. the UIDs) according to their "collection" over time by the RFID antennas 11, 12. Accordingly, the pre-processing step 41 includes sorting the read identification data received from the RFID antennas 11, 12 according to time order of reading, as schematically illustrated in Figure 5. Moreover, in order to render the algorithm more robust, the read identification data are separated, at this stage, in two groups according to which RFID antenna 11, 12 has provided said identification data, and thus according to the truck's side which the read identification data are related to.

## 2. Clustering

Once the pre-processing step 41 is terminated, the clustering phase 42 is carried out.

The separation in two data groups (left-side and right-side groups) during the pre-processing phase allows the algorithm to be more robust to missing readings. In fact, it may happen that an RFID tag is not read during the collection phase. In order to overcome this drawback, the clustering phase 42 is conveniently applied, first, to the group (associated to the corresponding truck's side) containing the highest number of read RFID tags.

More in detail, the clustering phase 42 includes:

- a K-means-based clustering step 421 wherein an initial clustering is accomplished that represents an initial estimated tire configuration of the truck;
- a Davies-Bouldin-Index-based evaluation step 422, wherein the K-means-based clustering step 421 is iterated: the quality of the clusters obtained at each iteration of the K-means-based clustering step 421 is evaluated by a Davies-Bouldin Index metric to select the best clusters and, hence, the best tire configuration of the truck;
- an Edit-Distance-based evaluation step 423 for determining the actual tire configuration of the truck based on an Edit Distance metric and a given dictionary of predefined tire configurations; and
- an optional twin tire recognition step 424 for detecting twin tires of dual-type wheels.

### 2.1 K-means

In the K-means-based clustering step 421 a K-means method is performed, whose inputs are the read identification data (conveniently, according to median reading timestamps associated/assigned with/to said read identification data) and an expected number of clusters.

The K-means method evaluates the distance between a sample and a reference point (centroid). This distance is evaluated for all the centroids, whose number is as much as the number of clusters. The closest centroid for a given sample determines the cluster which the given sample belongs to. The centroids are initially chosen randomly, while for each iteration they are evaluated as the mean value of the cluster, and the distances for each sample are evaluated again. The K-means method converges once no sample has changed its cluster.

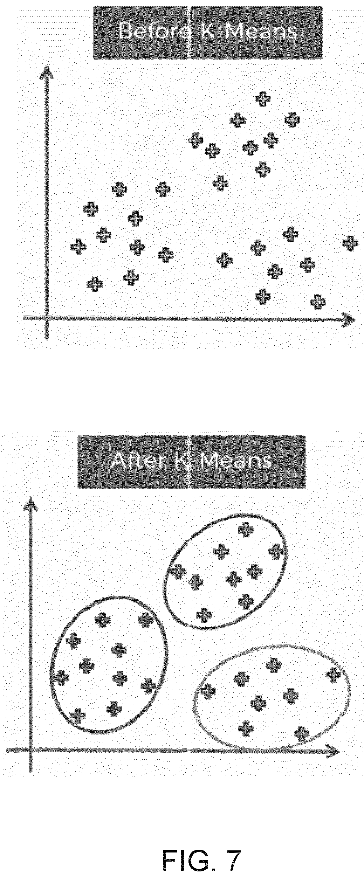

In this respect, Figures 6 and 7 show two examples of data clusters before and after K-means processing.

As the initial choice of the centroids is random, the **K-**means algorithm is performed N times (with N integer higher than zero, for example *N=10*) by evaluating, for each iteration, a metric (namely, Within-Cluster Sum of Squares - WCSS):

$$WCSS = \sum_{i=1}^{cluster} \sum_{j=1}^{sample} (x_{ij} - c_i)^2$$

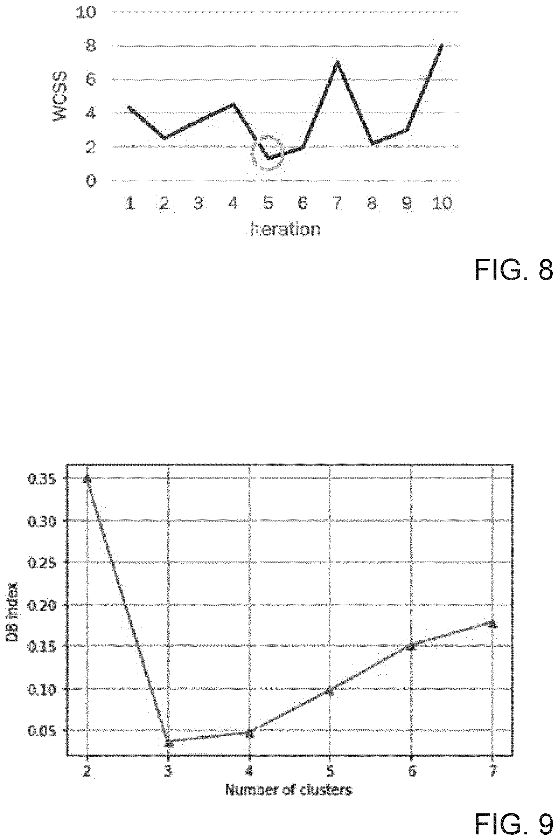

This metric simply evaluates the dispersion of data inside each cluster. Hence, the minimum value represents the best clustering for a given dataset and will be used for the following step (i.e., the Davies-Bouldin-Index-based evaluation step 422), as shown in Figure 8 where the lowest WCSS corresponds to the 5th iteration that is, thence, chosen as the one to be used for the Davies-Bouldin-Index-based evaluation step 422.

In summary, in the K-means-based clustering step 421, *q* (number of clusters) centroids are chosen randomly (initialization). For each read data item, the distance from each centroid is evaluated. The shortest distance identifies the centroid for the ith read data item. New centroids are chosen and new iteration(s) is/are performed until convergence occurs.

2.2 Davies-Bouldin Index

It is worth noting that the number of expected clusters *q* changes according to the considered truck. Therefore, the K-means algorithm is performed *n* times (with *n* integer higher than zero) by changing, for each iteration, the number of clusters (e.g., *n=2, q=2,3*).

In order to determine the best clustering for a given dataset, the Davies-Bouldin Index (DBI) is used. This metric simply evaluates the ratio between the intra-cluster dispersion and the inter-cluster separation:

$$DBI = maximum \left( \frac{S_i + S_j}{M_{ij}} \right),$$

where $S_i$ and $S_j$ denote the distance of cluster points from their centroids, and $M_{ij}$ denotes the distance between the $i^{th}$ and the $j^{th}$ centroids.

The minimum value of the DBI corresponds to the ideal number of clusters $q_{Ideal}$, as shown in Figure 9 where the lowest value of the DBI is three and, hence, the ideal number of clusters is three (i.e., $q_{Ideal}=3$).

At this stage, the estimated tire configuration of the truck is extracted by counting the number of different UIDs for each cluster. For example, if one UID is detected in the first cluster, two UIDs are detected in the second cluster and three UIDs are detected in the third cluster, then the tire configuration of the truck will be 1-2-3 (i.e., one steering tire/wheel, two driving tires/wheels, three trailer tires/wheels).

2.3 Edit Distance

Then, in the Edit-Distance-based evaluation step 423, the estimated tire configuration is looked up in a given dictionary (which may be stored on the RFID reader 13 or on any other device connected to the RFID gate 1 in a wired or wireless fashion) containing several predefined trucks' tire configurations. It may happen that the estimated tire configuration does not correspond to any predefined one in the given dictionary: in this case, the estimated tire configuration is then compared to all the predefined tire configurations having the same overall number of tires. For each comparison, an Edit Distance metric is evaluated, which represents the number of operations required to transform the estimated tire configuration into the predefined one considered. The minimum Edit Distance determines the most probable tire configuration.

$$\begin{cases} Predefined\ tire\ configuration\ [1,2,3] \\ Estimated\ tire\ configuration\ \ \ [1,1,3] \end{cases} \rightarrow Edit\ Distance = 1$$

$$\begin{cases} Predefined\ tire\ configuration\ [1,3,2] \\ Estimated\ tire\ configuration\ \ \ [1,1,3] \end{cases} \rightarrow Edit\ Distance = 3$$

Therefore, the output of the Edit-Distance-based evaluation step 423 is the configuration of the tires/wheels of the truck and the number of axles (i.e. the number of UIDs for each cluster) for the truck's side with the highest number of read UIDs. Obviously, the same configuration can be considered also for the other truck's side.

In view of the foregoing, the clustering phase 42 exploits three statistical methodologies (namely, K-means, Davies-Bouldin Index and Edit Distance) jointly and synergistically in order to efficiently achieve the best clustering results.

2.4 Twin tire recognition

The twin tire recognition sub-step 424 is an optional step that is only performed if it is apparent, from the tire configuration identified at the end of the previous step, that twin tires are expected on the vehicle. Once the Edit-Distance-based evaluation step 423 has been performed, a threshold-based analysis of relative time distances among the read RFID tags is carried out to detect twin tires of dual-type wheels of the truck.

Conveniently, a truck-length-related time difference is computed between the first RFID tag read and the last one and each reading timestamp is normalized to the truck-length-related time difference computed. Then, for each UID, a respective median timestamp is determined and a respective relative time distance between said respective median timestamp and the median timestamps of the other read UIDs is computed. Thence, when a computed relative time distance is lower than a given threshold (e.g., equal to a given percentage of the truck-length-related time difference), twin tires are detected.

## 3. Sequencing

Once the clustering phase 42 has been carried out, the sequencing phase 43 is performed to correctly assign the UIDs to the actual tires.

Because the choice of the best side is based on the highest number of read RFID tags and because, at the end of the clustering phase, a tire configuration has been identified for all actual tires (even those for which there may be missing RFID readings), "missing tires" are not expected at this stage. Therefore, RFID tags' UIDs are assigned according to their cluster and their chronological position in it.

In the case where at least a twin tire configuration has been detected and sub-step 424 has been executed, it is also possible to particularly identify, within the twin tire configuration, which tire is in the inner position and which is in the outer position. In this case:

- if there is at least one RFID reading for each tire in the twin tire configuration and the number of readings for one tire is different from the number of readings for the other tire, then it is assumed that the UID with the highest number of readings is associated to the outer tire and the UID with the lowest number to the inner tire: in fact, it is expected that the reading of the tag of the inner tire by the antennas 11,12 is more prone to errors due to noise and interferences;
- if there is at least one RFID reading with respect to one UID only, then it is assumed that said UID corresponds to the outer tire;
- in the unlikely cases where (a) there are zero readings for both the tires of the twin tire configuration, or (b) the number of readings for each tire in the twin tire configuration is the same, then repeating the reading of the tags of the tires in the twin tire configuration may be needed.

Tire assignment on the other truck's side (i.e. the side corresponding to the data group on which the clustering phase has not been applied) can be split into two different cases:

- all the expected RFID tags have been read: thence, read UIDs are assigned to tires according to time order of reading as previously described; or
- there is at least one missing RFID tag: in this case, for each UID, the median timestamp is evaluated; then, the time distance between each timestamp related to the truck's side with fewer readings and the ones related to the other side is evaluated. In this way, tires on the truck's side with fewer readings are associated with the corresponding ones on the other side and the belonging cluster is determined; once the clusters have been determined, read UIDs are assigned to tires according to time order of reading as previously described.

In view of the foregoing, technical advantages and innovative features of the present invention are immediately clear to those skilled in the art.

In particular, it is worth noting that the tire identification method according to the present invention allows achieving excellent tire identification performance in terms of successful tire identifications and computational load. This enables the use of this lightweight and energy-efficient methodology even on low-performing processing devices.

As previously explained, the tire identification method according to the present invention is mainly based on three statistical methods, namely K-means, Davies-Bouldin Index and Edit Distance, wherein all these three statistical methods are known in the art, but the specific combined, sequential and synergistic use of them according to the present invention is not known at all in the art and brings significant benefits to overall performance of tire identification.

Moreover, the tire identification method according to the present invention allows identifying the configuration of a truck by using the arrangement of the axles. At the end of the process, a dictionary check is performed to look for a correlation with one known configuration in a predefined dictionary containing a-priori-identified configurations. This approach actually makes the methodology independent not only of the various types of trucks, but also of the type of motor vehicle itself. In fact, this method is also applicable to other types of vehicles, differently from known methods that need to fix a priori the type of structure/vehicle in order to exploit the a priori knowledge of the possible RFID tag position/geometry.

This concept is strengthened by the fact that the method according to the present invention uses only one dimension, i.e. time, which makes the algorithmic pipeline potentially adaptable to other acquisition systems other than those depending from the RFID and, hence, usable for new (even non-automotive) applications that require sequencing and identification of configurations.

In summary, the following strengths of the present invention can be highlighted:

1) the tire identification method can be considered lightweight thanks to its low computational burden, making the system effectively energy efficient;

2) the algorithm does not require a training phase: this makes the implementation of the present solution independent of the application context;

3) the system is customizable since the dictionary containing the list of truck's types can be created with predefined configurations; the algorithm will use the predefined configurations to find either an exact matching between the configuration found and an existing one, or to detect the most likely one based on an Edit-Distance-based comparison;

4) the system is robust with respect to the loss of some readings of RFID tags or of all readings of a specific RFID tag. The algorithm identifies the best side of the vehicle and uses it to search for the actual tire configuration; the determined tire configuration is then used for tire identification and positioning on the other truck's side. In any case, the Edit distance helps, with a good approximation, to identify the correct configurations even in cases of incorrect readings and/or noisy data;

5) only a time metric is used; this effectively makes the tire identification method independent from the RFID gate 1, because it becomes indifferent which technology or method is used to acquire the data;

6) any problem similar to that of identifying a truck configuration can potentially be solved by the present invention: as anticipated above, the proposed tire identification method is applicable to any type of vehicle, such as a train, a car or a bus.

In conclusion, it is clear that numerous modifications and variants can be made to the present invention, all falling within the scope of the invention, as defined in the appended claims.

To this respect, it is important to note that, even if in the foregoing the invention has been described by making specific reference to the use of RFID technology, it is absolutely clear to those skilled in the art that any other wireless identification technology can be used, such as, for example, a wireless identification technology of the Internet of Things (IoT) type.

Additionally, even if in the foregoing reference has been made to the specific example of tire tread wear monitoring, it is absolutely evident to those skilled in the art that the present invention can be advantageously exploited with any kind of tire feature monitoring (e.g., tire pressure monitoring, tire damage detection and monitoring, etc.).

**Claims**

1. Computer-implemented method (4) for efficiently identifying tire configuration of motor vehicles (2) having tires fitted, each, with a respective wireless identification device, the method (4) comprising:

- receiving identification data indicative of the unique identifiers of the tires positioned on a left side of a given motor vehicle (2) of said motor vehicles;
- receiving identification data indicative of the unique identifiers of the tires positioned on the right side of the given motor vehicle (2);
- grouping the received identification data into a left-side data group and a right-side data group;

- sorting the identification data in the left-side group and the identification data in the right-side group according to time order of acquisition;
- for either the left-side group or the right-side group:

- iteratively applying a K-means clustering method to the sorted identification data thereby obtaining, at each iteration, a respective identification data clustering representing a respective candidate tire configuration of the given motor vehicle (2);
- evaluating the obtained identification data clusterings by a Davies-Bouldin Index metric thereby determining an estimated tire configuration of the given motor vehicle (2);
- determining an actual tire configuration of the given motor vehicle (2) by evaluating the estimated tire configuration by an Edit Distance metric;

- determining a respective position, in the determined actual tire configuration, of each tire on the side associated to the determined group and assigning to said position the respective unique identifier based on said determined actual tire configuration and on the sorted identification data;
- determining a respective position, in the determined actual tire configuration, of each tire on the opposite side of the given motor vehicle (2) and assigning to said position the respective unique identifier based on said determined actual tire configuration and on the sorted identification data.

2. The method of claim 1, wherein the actual tire configuration of the given motor vehicle (2) is determined based on a given dictionary of predefined tire configurations.

3. The method of claim 2, wherein the actual tire configuration of the given motor vehicle (2) is determined by looking up the estimated tire configuration in the given dictionary, and wherein:

- if the estimated tire configuration corresponds to a given predefined tire configuration among said predefined tire configurations, it is determined that the actual tire configuration is said given predefined tire configuration; whereas
- if the estimated tire configuration does not match any of the predefined tire configurations, a respective Edit Distance is computed between the estimated tire configuration and each predefined tire configuration in the given dictionary, whereby the actual tire configuration is the predefined tire configuration with the lowest Edit Distance from the estimated tire configuration.

4. The method according to any claim 1-3, wherein the respective position, in the determined actual tire configuration, of each tire on the opposite side of the given motor vehicle (2) is determined and the respective unique identifier is assigned to said position based also on the determined positions, in said determined actual tire configuration, of the tires on the side associated to the determined group.

5. The method according to any preceding claim, further including performing a threshold-based analysis of relative time distances among the sorted identification data to detect twin tires of dual wheels of the given motor vehicle (2).

6. The method according to any preceding claim, wherein the given motor vehicle is a truck, a semitruck (2), a road train, a car, a bus or the like.

7. Tire identification gate (1) designed to be driven through by, and to identify tires of, motor vehicles (2) having tires fitted, each, with a respective wireless identification device, the tire identification gate (1) comprising at least two antennas (11, 12) and a reader (13);

wherein the antennas (11, 12) are:

- arranged on opposite sides of a path to be driven by the motor vehicles (2) passing through the tire identification gate (1); and
- configured, while a given motor vehicle (2) of said motor vehicles is driving through the tire identification gate (1), to acquire from the respective wireless identification device of each tire of said given motor vehicle (2) respective identification data indicative of a respective unique identifier of said tire;

wherein the reader (13) is configured to carry out the method as claimed in any preceding claim.

8. The tire identification gate of claim 7, further comprising a tire monitoring system (14) configured, while the given motor vehicle (2) is driving through the tire identification gate (1), to monitor one or more tire features; wherein each identified tire is associated with respective tire monitoring data provided by the monitoring system (14) and related to said identified tire.

9. Tire identification method comprising:

   a) providing a tire identification gate (1) to be driven through by motor vehicles (2) having tires fitted, each, with a respective wireless identification device, wherein said tire identification gate (1) comprises

   - at least two antennas (11, 12) arranged on opposite sides of a path to be driven by the motor vehicles (2) passing through the tire identification gate (1), and
   - a reader (13);

   b) acquiring, while a given motor vehicle (2) of said motor vehicles is driving through the tire identification gate (1), by the antennas (11, 12) from the respective wireless identification device of each tire of said given motor vehicle (2), respective identification data indicative of a respective unique identifier of said tire;
   c) carrying out, by the reader (13), the method (4) as claimed in any claim 1-6.

10. The tire identification method of claim 9, wherein the tire identification gate (1) further comprises a tire monitoring system (14), and wherein the tire identification method further includes:

   - monitoring, by the tire monitoring system (14), while the given motor vehicle (2) is driving through the tire identification gate (1), one or more tire features; and
   - associating each identified tire with respective tire monitoring data provided by the monitoring system (14) and related to said identified tire.

11. Computer program comprising instructions which, when the program is executed by a computer, cause the computer to carry out the method of any claim 1-6.

12. A computer-readable storage medium comprising instructions which, when executed by a computer, cause the computer to carry out the method of any claim 1-6.

13. Software or firmware program product comprising software/firmware code portions that are:

   - loadable/storable on, and executable by, a reader (13) of a tire identification gate (1) that is designed to be driven through by motor vehicles (2) having tires fitted, each, with a respective wireless identification device, and that comprises also at least two antennas (11, 12) arranged on opposite sides of a path to be driven by the motor vehicles (2) passing through the tire identification gate (1), wherein said antennas (11, 12) are configured to

   - acquire, while a given motor vehicle (2) of said motor vehicles is driving through the tire identification gate (1), from the respective wireless identification device of each tire of said given motor vehicle (2), respective identification data indicative of a respective unique identifier of said tire, and
   - provide the reader (13) with the acquired identification data; and

   - such to cause, when executed by the reader (13), said reader (13) to carry out the method claimed in any claim 1-6.

**Patentansprüche**

1. Computerimplementiertes Verfahren (4) zum effizienten Identifizieren einer Reifenkonfiguration von Kraftfahrzeugen (2), die Reifen aufweisen, die jeweils mit einer jeweiligen drahtlosen Identifizierungsvorrichtung ausgestattet sind, das Verfahren (4) umfassend:

   - Empfangen von Identifizierungsdaten, die die eindeutigen Kennungen der Reifen angeben, die auf einer linken Seite eines gegebenen Kraftfahrzeugs (2) der Kraftfahrzeuge positioniert sind;
   - Empfangen von Identifizierungsdaten, die die eindeutigen Kennungen der Reifen angeben, die auf der rechten Seite des gegebenen Kraftfahrzeugs (2) positioniert sind;
- Gruppieren der empfangenen Identifizierungsdaten zu einer Datengruppe der linken Seite und einer Datengruppe der rechten Seite;
- Sortieren der Identifizierungsdaten in der linken Gruppe und der Identifizierungsdaten in der Gruppe der rechten Seite gemäß einer zeitlichen Reihenfolge einer Erfassung;
- für entweder die Gruppe der linken Seite oder die Gruppe der rechten Seite:

- iteratives Anwenden eines K-Means-Clustering-Verfahrens auf die sortierten Identifizierungsdaten, wodurch bei jeder Iteration eine jeweilige Identifizierungsdaten-Clusterung erhalten wird, die eine jeweilige Kandidatenreifenkonfiguration des gegebenen Kraftfahrzeugs (2) darstellt;
- Auswerten der erhaltenen Identifizierungsdaten-Clusterungen durch eine Davies-Bouldin-Indexmetrik, wodurch eine geschätzte Reifenkonfiguration des gegebenen Kraftfahrzeugs (2) bestimmt wird;
- Bestimmen einer tatsächlichen Reifenkonfiguration des gegebenen Kraftfahrzeugs (2) durch Auswerten der geschätzten Reifenkonfiguration durch eine Editierdistanzmetrik;
- Bestimmen einer jeweiligen Position in der bestimmten tatsächlichen Reifenkonfiguration jedes Reifens auf der Seite, die der bestimmten Gruppe zugeordnet ist, und Zuweisen der jeweiligen eindeutigen Kennung zu der Position basierend auf der bestimmten tatsächlichen Reifenkonfiguration und auf den sortierten Identifizierungsdaten;
- Bestimmen einer jeweiligen Position jedes Reifens auf der gegenüberliegenden Seite des gegebenen Kraftfahrzeugs (2) in der bestimmten tatsächlichen Reifenkonfiguration und Zuweisen der jeweiligen eindeutigen Kennung zu der Position basierend auf der bestimmten tatsächlichen Reifenkonfiguration und den sortierten Identifizierungsdaten.

2. Verfahren nach Anspruch 1, wobei die tatsächliche Reifenkonfiguration des gegebenen Kraftfahrzeugs (2) basierend auf einem gegebenen Wörterbuch vordefinierter Reifenkonfigurationen bestimmt wird.

3. Verfahren nach Anspruch 2, wobei die tatsächliche Reifenkonfiguration des gegebenen Kraftfahrzeugs (2) durch Nachschlagen der geschätzten Reifenkonfiguration in dem gegebenen Wörterbuch bestimmt wird, und wobei:

- falls die geschätzte Reifenkonfiguration einer gegebenen vordefinierten Reifenkonfiguration unter den vordefinierten Reifenkonfigurationen entspricht, bestimmt wird, dass die tatsächliche Reifenkonfiguration die gegebene vordefinierte Reifenkonfiguration ist; wohingegen
- falls die geschätzte Reifenkonfiguration mit keiner der vordefinierten Reifenkonfigurationen übereinstimmt, eine jeweilige Editierdistanz zwischen der geschätzten Reifenkonfiguration und jeder vordefinierten Reifenkonfiguration in dem gegebenen Wörterbuch berechnet wird, wodurch die tatsächliche Reifenkonfiguration die vordefinierte Reifenkonfiguration mit der geringsten Editierdistanz von der geschätzten Reifenkonfiguration ist.

4. Verfahren nach einem der Ansprüche 1 bis 3, wobei die jeweilige Position jedes Reifens auf der gegenüberliegenden Seite des gegebenen Kraftfahrzeugs (2) in der bestimmten tatsächlichen Reifenkonfiguration bestimmt wird und die jeweilige eindeutige Kennung der Position auch basierend auf den bestimmten Positionen der Reifen auf der Seite, die der bestimmten Gruppe zugeordnet ist, in der bestimmten tatsächlichen Reifenkonfiguration zugewiesen wird.

5. Verfahren nach einem der vorstehenden Ansprüche, das ferner ein Durchführen einer schwellenwertbasierten Analyse relativer Zeitabstände zwischen den sortierten Identifizierungsdaten einschließt, um Zwillingsreifen von Doppelrädern des gegebenen Kraftfahrzeugs (2) zu erkennen.

6. Verfahren nach einem der vorstehenden Ansprüche, wobei das gegebene Kraftfahrzeug ein Lastkraftwagen, ein Sattelschlepper (2), ein Road Train, ein Auto, ein Bus oder dergleichen ist.

7. Reifenidentifizierungstor (1), das gestaltet ist, um von Kraftfahrzeugen (2) durchfahren zu werden und um Reifen davon zu identifizieren, die Reifen aufweisen, die jeweils mit einer jeweiligen drahtlosen Identifizierungsvorrichtung ausgestattet sind, das Reifenidentifizierungstor (1) umfassend mindestens zwei Antennen (11, 12) und ein Lesegerät (13);

wobei die Antennen (11, 12) sind:

- auf gegenüberliegenden Seiten eines Weges angeordnet, auf dem die Kraftfahrzeuge (2) fahren, die das Reifenidentifizierungstor (1) passieren; und

- konfiguriert, während ein gegebenes Kraftfahrzeug (2) der Kraftfahrzeuge durch das Reifenidentifizierungstor (1) fährt, um von der jeweiligen drahtlosen Identifizierungsvorrichtung jedes Reifens des gegebenen Kraftfahrzeugs (2) jeweilige Identifizierungsdaten zu erfassen, die eine jeweilige eindeutige Kennung des Reifens angeben;

wobei das Lesegerät (13) konfiguriert ist, um das Verfahren nach einem der vorstehenden Ansprüche vorzunehmen.

8. Reifenidentifizierungstor nach Anspruch 7, ferner umfassend ein Reifenüberwachungssystem (14), das konfiguriert ist, um, während das jeweilige Kraftfahrzeug (2) durch das Reifenidentifizierungstor (1) fährt, ein oder mehrere Reifenmerkmale zu überwachen;
wobei jedem identifizierten Reifen jeweilige Reifenüberwachungsdaten zugeordnet sind, die durch das Überwachungssystem (14) bereitgestellt werden und sich auf den identifizierten Reifen beziehen.

9. Reifenidentifizierungsverfahren, umfassend:

a) Bereitstellen eines Reifenidentifizierungstors (1), um von Kraftfahrzeugen (2) durchfahren zu werden, die Reifen aufweisen, die jeweils mit einer jeweiligen drahtlosen Identifizierungsvorrichtung ausgestattet sind, wobei das Reifenidentifizierungstor (1) umfasst

- mindestens zwei Antennen (11, 12), die auf gegenüberliegenden Seiten eines Weges angeordnet sind, auf dem die Kraftfahrzeuge (2) fahren, die das Reifenidentifizierungstor (1) passieren, und
- ein Lesegerät (13);

b) Erfassen, während ein gegebenes Kraftfahrzeug (2) der Kraftfahrzeuge durch das Reifenidentifizierungstor (1) fährt, durch die Antennen (11, 12) von der jeweiligen drahtlosen Identifizierungsvorrichtung jedes Reifens des gegebenen Kraftfahrzeugs (2), jeweiliger Identifizierungsdaten, die eine jeweilige eindeutige Kennung des Reifens angeben;
c) Vornehmen, durch das Lesegerät (13), des Verfahrens (4) nach einem der Ansprüche 1 bis 6.

10. Reifenidentifizierungsverfahren nach Anspruch 9, wobei das Reifenidentifizierungstor (1) ferner ein Reifenüberwachungssystem (14) einschließt und wobei das Reifenidentifizierungsverfahren ferner einschließt:

- Überwachen, durch das Reifenüberwachungssystem (14), eines oder mehrerer Reifenmerkmale, während das jeweilige Kraftfahrzeug (2) durch das Reifenidentifizierungstor (1) fährt; und
- Zuordnen jedes identifizierten Reifens zu den jeweiligen Reifenüberwachungsdaten, die durch das Überwachungssystem (14) bereitgestellt werden und sich auf den identifizierten Reifen beziehen.

11. Computerprogramm, umfassend Anweisungen, die, wenn das Programm durch einen Computer ausgeführt wird, den Computer veranlassen, das Verfahren nach einem der Ansprüche 1 bis 6 vorzunehmen.

12. Computerlesbares Speichermedium, umfassend Anweisungen, die, wenn sie durch einen Computer ausgeführt werden, den Computer veranlassen, das Verfahren nach einem der Ansprüche 1 bis 6 vorzunehmen.

13. Software- oder Firmware-Programmprodukt, umfassend Software-/Firmware-Codeteile, die sind:

- ladbar/speicherbar auf und ausführbar durch ein Lesegerät (13) eines Reifenidentifizierungstors (1), das gestaltet ist, um von Kraftfahrzeugen (2) durchfahren zu werden, die Reifen aufweisen, die jeweils mit einer jeweiligen drahtlosen Identifizierungsvorrichtung ausgestattet sind, und das ferner mindestens zwei Antennen (11, 12) umfasst, die auf gegenüberliegenden Seiten eines Weges angeordnet sind, auf dem die Kraftfahrzeuge (2) fahren, die das Reifenidentifizierungstor (1) passieren, wobei die Antennen (11, 12) konfiguriert sind zum
- Erfassen, während ein gegebenes Kraftfahrzeug (2) durch das Reifenidentifizierungstor (1) fährt, von der jeweiligen drahtlosen Identifizierungsvorrichtung jedes Reifens des gegebenen Kraftfahrzeugs (2), jeweiliger Identifizierungsdaten, die eine jeweilige eindeutige Kennung des Reifens angeben, und
- Bereitstellen der erfassten Identifizierungsdaten an das Lesegerät (13); und
- derart, dass, wenn sie durch das Lesegerät (13) ausgeführt werden, das Lesegerät (13) das Verfahren nach einem der Ansprüche 1 bis 6 vornimmt.

## EP 4 427 950 B1

**Revendications**

1. Procédé (4) mis en œuvre par ordinateur destiné à identifier efficacement une configuration de pneu de véhicules à moteur (2) ayant des pneus équipés chacun d'un dispositif d'identification sans fil respectif, le procédé (4) comprenant :

   - la réception de données d'identification indicatives des identifiants uniques des pneus positionnés sur un côté gauche d'un véhicule à moteur (2) donné desdits véhicules à moteur ;
   - la réception de données d'identification indicatives des identifiants uniques des pneus positionnés sur le côté droit du véhicule à moteur (2) donné ;
   - le regroupement des données d'identification reçues en un groupe de données de côté gauche et un groupe de données de côté droit ;
   - le tri des données d'identification dans le groupe de côté gauche et des données d'identification dans le groupe de côté droit en fonction d'un ordre temporel d'acquisition ;
   - pour le groupe de côté gauche ou le groupe de côté droit :

      - l'application itérative d'un procédé de groupement des k-moyennes aux données d'identification triées, ce qui permet d'obtenir, à chaque itération, un groupement respectif de données d'identification représentant une configuration de pneu candidate respective du véhicule à moteur (2) donné ;
      - l'évaluation des groupements de données d'identification obtenus par une métrique d'indice de Davies-Bouldin, ce qui permet de déterminer une configuration de pneu estimée du véhicule à moteur (2) donné ;
      - la détermination d'une configuration de pneu réelle du véhicule à moteur (2) donné par évaluation de la configuration de pneu estimée par une métrique de distance d'édition ;
      - la détermination d'une position respective, dans la configuration de pneu réelle déterminée, de chaque pneu sur le côté associé au groupe déterminé et l'attribution à ladite position de l'identifiant unique respectif sur la base de ladite configuration de pneu réelle déterminée et des données d'identification triées ;
      - la détermination d'une position respective, dans la configuration de pneu réelle déterminée, de chaque pneu sur le côté opposé du véhicule à moteur (2) donné et l'attribution à ladite position de l'identifiant unique respectif sur la base de ladite configuration de pneu réelle déterminée et des données d'identification triées.

2. Procédé selon la revendication 1, dans lequel la configuration de pneu réelle du véhicule à moteur (2) donné est déterminée sur la base d'un dictionnaire donné de configurations de pneu prédéfinies.

3. Procédé selon la revendication 2, dans lequel la configuration de pneu réelle du véhicule à moteur (2) donné est déterminée en recherchant la configuration de pneu estimée dans le dictionnaire donné, et dans lequel :

   - si la configuration de pneu estimée correspond à une configuration de pneu prédéfinie donnée parmi lesdites configurations de pneu prédéfinies, il est déterminé que la configuration de pneu réelle est ladite configuration de pneu prédéfinie donnée ; alors que
   - si la configuration de pneu estimée ne correspond à aucune des configurations de pneu prédéfinies, une distance d'édition respective est calculée entre la configuration de pneu estimée et chaque configuration de pneu prédéfinie dans le dictionnaire donné, selon lequel la configuration de pneu réelle est la configuration de pneu prédéfinie avec la distance d'édition la plus faible par rapport à la configuration de pneu estimée.

4. Procédé selon l'une quelconque des revendications 1 à 3, dans lequel la position respective, dans la configuration de pneu réelle déterminée, de chaque pneu sur le côté opposé du véhicule à moteur (2) donné est déterminée et l'identificateur unique respectif est attribué à ladite position sur la base également des positions déterminées, dans ladite configuration de pneu réelle déterminée, des pneus sur le côté associé au groupe déterminé.

5. Procédé selon l'une quelconque revendication précédente, comportant en outre la réalisation d'une analyse basée sur un seuil de distances temporelles relatives parmi les données d'identification triées afin de détecter des pneus jumelés de roues jumelées du véhicule à moteur (2) donné.

6. Procédé selon l'une quelconque revendication précédente, dans lequel le véhicule à moteur donné est un camion, un semi-camion (2), un train routier, une voiture, un autobus ou similaire.

7. Portique d'identification de pneu (1) conçu pour être traversé par et pour identifier des pneu de véhicules à moteur (2) ayant des pneus équipés chacun d'un dispositif d'identification sans fil respectif, le portique d'identification de pneu (1)

13

comprenant au moins deux antennes (11, 12) et un lecteur (13) ;

dans lequel les antennes (11, 12) sont :

- disposées sur des côtés opposés d'une voie à emprunter par les véhicules à moteur (2) qui passent à travers le portique d'identification de pneu (1) ; et
- configurées, pendant qu'un véhicule à moteur (2) donné desdits véhicules à moteur roule à travers le portique d'identification de pneu (1), pour acquérir à partir du dispositif d'identification sans fil respectif de chaque pneu dudit véhicule à moteur (2) donné, des données d'identification respectives indicatives d'un identifiant unique respectif dudit pneu ;

dans lequel le lecteur (13) est configuré pour mettre en œuvre le procédé selon l'une quelconque revendication précédente.

8. Portique d'identification de pneu selon la revendication 7, comprenant en outre un système de surveillance (14) de pneu configuré, pendant que le véhicule à moteur (2) donné roule à travers le portique d'identification de pneu (1), pour surveiller une ou plusieurs caractéristiques de pneu ;
dans lequel chaque pneu identifié est associé à des données de surveillance de pneu respectives fournies par le système de surveillance (14) et liées audit pneu identifié.

9. Procédé d'identification de pneu comprenant :

a) la fourniture d'un portique d'identification de pneu (1) à être traversé par des véhicules à moteur (2) ayant des pneus équipés chacun d'un dispositif d'identification sans fil respectif, dans lequel ledit portique d'identification de pneu (1) comprend

- au moins deux antennes (11, 12) disposées sur des côtés opposés d'une voie à emprunter par les véhicules à moteur (2) qui passent à travers le portique d'identification de pneu (1), et
- un lecteur (13) ;

b) l'acquisition, pendant qu'un véhicule à moteur (2) donné desdits véhicules à moteur traverse le portique d'identification de pneu (1), par les antennes (11, 12) à partir du dispositif d'identification sans fil respectif de chaque pneu dudit véhicule à moteur (2) donné, de données d'identification respectives indicatives d'un identifiant unique respectif dudit pneu ;
c) la mise en œuvre, par le lecteur (13), du procédé (4) selon l'une quelconque des revendications 1 à 6.

10. Procédé d'identification de pneu selon la revendication 9, dans lequel le portique d'identification de pneu (1) comprend en outre un système de surveillance (14) de pneu, et dans lequel le procédé d'identification de pneu comporte en outre :

- la surveillance, par le système de surveillance (14) de pneu, pendant que le véhicule à moteur (2) donné roule à travers le portique d'identification de pneu (1), d'une ou plusieurs caractéristiques de pneu ; et
- l'association de chaque pneu identifié à des données de surveillance de pneu respectives fournies par le système de surveillance (14) et liées audit pneu identifié.

11. Programme informatique comprenant des instructions qui, lorsque le programme est exécuté par un ordinateur, amènent l'ordinateur à mettre en œuvre le procédé selon l'une quelconque des revendications 1 à 6.

12. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 6.

13. Produit-programme logiciel ou micrologiciel comprenant des parties de code logiciel/micrologiciel qui :

- peuvent être chargées/stockées sur, et être exécutées par, un lecteur (13) d'un portique d'identification de pneu (1) qui est conçu pour être traversé par des véhicules à moteur (2) ayant des pneus équipés chacun d'un dispositif d'identification sans fil respectif, et qui comprend au moins deux antennes (11, 12) disposées sur des côtés opposés d'une voie à emprunter par les véhicules à moteur (2) qui passent à travers le portique d'identification de pneu (1), dans lequel lesdites antennes (11, 12) sont configurées pour

- acquérir, pendant qu'un véhicule à moteur (2) donné desdits véhicules à moteur roule à travers le portique d'identification de pneu (1), à partir du dispositif d'identification sans fil respectif de chaque pneu dudit véhicule à moteur (2) donné, des données d'identification respectives indicatives d'un identifiant unique respectif dudit pneu, et

- fournir au lecteur (13) les données d'identification acquises ; et

- sont telles que, lorsqu'elles sont exécutées par le lecteur (13), elles amènent ledit lecteur (13) à mettre en œuvre le procédé selon l'une quelconque des revendications 1 à 6.

FIG. 1

FIG. 2

21

2

211

Steering wheels

212

Tractor Unit

214

Driving wheels

213

22

221

221

Semi-Trailer

222

222

223

223

Right side

Driving direction

Left side

FIG. 3

FIG. 4

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3074917 A1
- EP 2829659 A1
- US 10935466 B2
- US 8009027 B2
- DE 102010026872 A1
- EP 4101662 A1
- JP 2012126341 A